# EUROPÄISCHE PATENTSCHRIFT

(11) **EP 3 679 250 B1**
(45) Veröffentlichungstag und Bekanntmachung des Hinweises auf die Patenterteilung: **03.11.2021**
(21) Anmeldenummer: 17765128.8
(22) Anmeldetag: 04.09.2017
(51) Int. Cl.: F04C 18/16, F04C 28/12

(54) **SCHRAUBENVERDICHTER**
SCREW COMPRESSOR
COMPRESSEUR À VIS

(43) Veröffentlichungstag der Anmeldung: 15.07.2020
(73) Patentinhaber: BITZER Kühlmaschinenbau GmbH, 71065 Sindelfingen (DE)
(72) Erfinder: MIKULIC, Tihomir, 71088 Holzgerlingen (DE); KIENZLE, Dominic, 71272 Renningen (DE); PABST, Marcus, 72108 Rottenburg (DE)
(74) Vertreter: Hoeger, Stellrecht & Partner Patentanwälte mbB
(86) Internationale Anmeldenummer: PCT/EP2017/072081
(87) Internationale Veröffentlichungsnummer: WO 2019/042572

(56) Entgegenhaltungen:
- WO-A1-93/18307
- WO-A1-2016/055412
- US-A1- 2004 234 381

## Beschreibung

Die Erfindung betrifft einen Schraubenverdichter umfassend ein Verdichtergehäuse mit einem in diesem angeordneten Schraubenläuferraum, zwei in dem Schraubenläuferraum angeordnete und an dem Verdichtergehäuse jeweils um eine Schraubenläuferachse drehbar gelagerte Schraubenläufer, die mit ihren Schraubenkonturen ineinandergreifen und jeweils mit an diese angrenzenden und diese teilweise umschließenden Verdichtungswandflächen zusammenwirken, um über einen im Verdichtergehäuse angeordneten Niederdruckraum zugeführtes gasförmiges Medium aufzunehmen und im Bereich eines im Verdichtergehäuse angeordneten Hochdruckraums abzugeben, wobei das gasförmige Medium in zwischen den Schraubenkonturen und an diesen angrenzenden Verdichtungswandflächen gebildeten Verdichtungskammern bei Niederdruck mit einem Ansaugvolumen eingeschlossen und auf ein Endvolumen bei Hochdruck komprimiert wird, sowie mindestens einen in einem Schieberkanal des Verdichtergehäuses angeordneten und an beide Schraubenläufer mit Schieberverdichtungswandflächen angrenzenden Steuerschieber, welcher in einer Verschieberichtung parallel zu den Schraubenläuferachsen bewegbar und das Endvolumen und/oder das Anfangsvolumen beeinflussend ausgebildet ist, welcher starr mit einer Kolbenstange verbunden ist, die zu einer Zylinderanordnung zur Bewegung des mindestens einen Steuerschiebers führt, und welcher mittels einem die Kolbenstange in der Verschieberichtung bewegbar aufnehmenden Führungseinsatz relativ zum Verdichtergehäuse geführt ist.

Derartige Schraubenverdichter sind aus dem Stand der Technik, beispielsweise der WO 2016/055412 bekannt.

Bei derartigen Schraubenverdichtern besteht das Problem, dass einerseits eine präzise Führung des mindestens einen Steuerschiebers zum einen in dem Schieberkanal und zum anderen durch den auf die Kolbenstange wirkenden Führungseinsatz erforderlich ist und andererseits bei einer sehr präzisen Führung der Kolbenstange in dem Führungseinsatz ein Verklemmen derselben durch Verkanten erfolgen kann, wenn sich der Steuerschieber im Schieberkanal aufgrund des vorhandenen Spiels quer zur Verschieberichtung bewegt.

Der Erfindung liegt daher die Aufgabe zugrunde, einen Schraubenverdichter der gattungsgemäßen Art derart zu verbessern, dass eine möglichst präzise Führung der Kolbenstange im Führungseinsatz ohne ein Verklemmen erfolgt.

Diese Aufgabe wird bei einem Schraubenverdichter der eingangs beschriebenen Art erfindungsgemäß dadurch gelöst, dass in dem Führungseinsatz die Kolbenstange mittels eines Führungselements quer zur Verschieberichtung elastisch nachgiebig geführt ist.

Durch eine derartige elastisch nachgiebige Führung der Kolbenstange wird erreicht, dass ein Verklemmen der Kolbenstange in dem Führungseinsatz verhindert werden kann.

Besonders vorteilhaft lässt sich die elastisch nachgiebige Führung der Kolbenstange mittels des Führungselements dann erreichen, wenn das Führungselement quer zur Verschieberichtung relativ zum Trägerkörper des Führungseinsatzes elastisch bewegbar ist.

Um andererseits aber auch eine möglichst präzise Führung der Kolbenstange in dem Führungseinsatz zu erreichen ist vorzugsweise vorgesehen, dass das Führungselement in Richtung einer Umfangsfläche der Kolbenstange elastisch vorgespannt an der Umfangsfläche anliegt.

Ein derartiges elastisch vorgespanntes Anliegen des Führungselements an der Umfangsfläche erlaubt es, bei an der Kolbenstange auftretenden Schwingungen diese zu dämpfen und außerdem trotz der elastischen Nachgiebigkeit der Führung der Kolbenstange eine möglichst hohe Präzision der Führung der Kolbenstange zu erreichen.

Besonders vorteilhaft ist es, wenn das Führungselement mit mindestens einer spaltfrei an einer Umfangsfläche der Kolbenstange anliegenden Führungsfläche für die Kolbenstange versehen ist und wenn die Führungsfläche quer zur Verschieberichtung relativ zum Trägerkörper des Führungseinsatzes elastisch bewegbar ist.

Hinsichtlich der Ausbildung des Führungselements mit der Führungsfläche wurden bislang keine näheren Angaben gemacht.

So sieht eine besonders günstige Lösung vor, dass das mindestens eine Führungselement durch einen relativ zum Trägerkörper des Führungseinsatzes bewegbaren Führungsbereich eines Führungskörpers gebildet ist.

Der Führungskörper könnte dabei prinzipiell relativ zum Führungseinsatz als Ganzes beweglich sein.

Besonders günstig ist es, wenn der Führungskörper mit einer Basis festsitzend in dem Trägerkörper des Führungseinsatzes angeordnet ist.

Insbesondere lässt sich in diesem Fall vorzugsweise das mindestens eine Führungselement so anordnen, dass dieses von dem Führungskörper geführt und dadurch relativ zu dem Trägerkörper des Führungseinsatzes bewegbar ist.

Prinzipiell reicht zur Realisierung der erfindungsgemäßen Lösung die Anordnung eines Führungselements aus.

Besonders günstig lässt sich jedoch die Kolbenstange führen, wenn diese durch mehrere in der Verschieberichtung im Abstand von einander angeordnete Führungselemente geführt ist.

Eine derartige mehrfache Führung der Kolbenstange durch die Führungselemente ist einerseits aufgrund der elastischen Bewegbarkeit derselben möglich, ohne dass ein Verklemmen auftritt, und hat andererseits den Vorteil, dass dadurch die Dämpfungswirkung auf die Kolbenstange bei in der Kolbenstange auftretenden Schwingungen erhöht wird.

Prinzipiell könnte das Führungselement derart aus elastischem Material ausgebildet sein, dass es aufgrund seiner Eigendeformation beim Anlegen an die Umfangsfläche der Kolbenstange mit Vorspannung auf die Umfangsfläche der Kolbenstange wirkt.

Um eine definierte Vorspannung des Führungselements in Richtung auf die Umfangsfläche der Kolbenstange zu erreichen ist vorzugsweise vorgesehen, dass das Führungselement durch ein dieses beaufschlagendes federelastisches Element in Richtung der Umfangsfläche der Kolbenstange vorgespannt ist.

Ein derartiges federelastisches Element könnte in unterschiedlicher Richtung auf das Führungselement einwirken.

Besonders günstig ist es, wenn das federelastische Element das Führungselement auf einer der Kolbenstange abgewandten Seite beaufschlagt.

Um eine möglichst große Vorspannkraft in Richtung der Umfangsfläche der Kolbenstange zu erreichen, ist vorzugsweise vorgesehen, dass das mindestens eine Führungselement durch das federelastische Element abgestützt ist. Besonders günstig lässt sich eine Abstützung des federelastischen Elements dann erreichen, wenn das federelastische Element das Führungselement auf einer der Kolbenstange abgewandten Seite relativ zum Trägerkörper des Führungseinsatzes abstützend ausgebildet ist.

Hinsichtlich der Anordnung des federelastischen Elements relativ zum Führungselement sind ebenfalls die unterschiedlichsten Lösungen denkbar.

Besonders vorteilhaft lässt sich das mindestens eine Führungselement dann abstützen, wenn dieses durch zwei in der Verschieberichtung im Abstand von einander angeordnete federelastische Elemente relativ zum Führungseinsatz abgestützt ist.

Hinsichtlich der Ausbildung des federelastischen Elements wurden bislang keine näheren Angaben gemacht.

So könnte das federelastische Element aus mehreren auf das Führungselement wirkenden Komponenten zusammengesetzt sein.

Eine besonders vorteilhafte Lösung sieht vor, dass das federelastische Element das Führungselement umschließend ausgebildet ist.

Eine konstruktiv besonders einfache Ausführungsform sieht vor, dass das federelastische Element als das Führungselement auf einer der Kolbenstange abgewandten Seite umschließender Ringkörper ausgebildet ist.

Ein derartiger federelastischer Ringkörper lässt sich beispielsweise dadurch realisieren, dass das federelastische Element als Federringkörper ausgebildet ist, wobei das Federelement eine zu einem Ringkörper ausgebildete Schraubenfeder sein kann oder eine den Ringkörper bildende Spiralfeder.

Eine andere vorteilhafte Lösung sieht vor, dass das federelastische Element als O-Ring aus federelastischem Gummimaterial ausgebildet ist.

Um trotz der elastischen Nachgiebigkeit des Führungselements eine möglichst hohe Führungspräzision für die Kolbenstange zu erhalten ist vorzugsweise vorgesehen, dass die Bewegbarkeit der Kolbenstange quer zur Verschieberichtung durch den Führungseinsatz begrenzt ist, so dass einerseits ein Klemmen der Kolbenstange im Führungseinsatz verhindert werden kann, andererseits aber die Präzision der Führung der Kolbenstange aufrechterhalten werden kann.

Hierzu ist beispielsweise vorgesehen, dass die Bewegbarkeit der Kolbenstange quer zur Verschieberichtung durch ein Begrenzungselement begrenzt ist.

Dies lässt sich beispielsweise dadurch realisieren, dass an dem Führungskörper das die Bewegung der Kolbenstange quer zur Verschieberichtung begrenzende Begrenzungselement angeordnet ist.

Das heißt, dass der Führungskörper nicht nur das Führungselement, sondern gleichzeitig auch das Begrenzungselement trägt.

Beispielsweise lässt sich dies dadurch realisieren, dass das Begrenzungselement durch einen Begrenzungsbereich des Führungskörpers gebildet ist.

Dabei könnte der Begrenzungsbereich so angeordnet sein, dass dieser die Bewegung des Führungselements begrenzt.

Eine konstruktiv besonders einfache Lösung sieht jedoch vor, dass das Begrenzungselement des Führungskörpers derart angeordnet ist, dass dieses unmittelbar auf die Kolbenstange zur Begrenzung der Bewegung quer zur Verschieberichtung wirkt.

Eine andere vorteilhafte Lösung sieht vor, dass das mindestens eine elastisch bewegbare Führungselement relativ zum Trägerkörper des Führungseinsatzes begrenzt elastisch bewegbar ist.

In diesem Fall ist somit vorgesehen, dass das Begrenzungselement auf das Führungselement wirkt und die Bewegung des Führungselements selbst begrenzt.

Beispielsweise ist in diesem Fall vorgesehen, dass das mindestens eine Führungselement durch ein am Trägerkörper des Führungseinsatzes angeordnetes Begrenzungselement quer zur Verschieberichtung begrenzt elastisch bewegbar ist.

Im einfachsten Fall lässt sich dies dadurch realisieren, dass das Begrenzungselement eine dem Führungselement zugewandte, am Trägerkörper des Führungseinsatzes angeordnete Begrenzungsfläche aufweist.

Im Zusammenhang mit den bisherigen Erläuterungen der erfindungsgemäßen Lösung wurde nicht näher auf die räumliche Anordnung des federelastischen Elements eingegangen.

So sieht eine besonders vorteilhafte Lösung vor, dass das federelastische Element in dem Führungseinsatz in einer abgeschlossenen Kammer angeordnet ist.

Eine derartige Anordnung des federelastischen Elements in einer abgeschlossenen Kammer in dem Führungseinsatz hat den Vorteil, dass selbst im Falle einer partiellen Zerstörung des federelastischen Elements dessen Partikel nicht in den Schraubenverdichter, insbesondere im Bereich des Steuerschiebers eintreten können, da die abgeschlossene Kammer dies verhindert.

Das federelastische Element lässt sich besonders einfach dann in einer Kammer anordnen, wenn dieses in einer in dem Führungskörper vorgesehenen Aufnahmenut angeordnet ist, wobei die Aufnahmenut beispielsweise durch eine Wand des den Führungskörper aufnehmenden Trägerkörpers des Führungseinsatzes verschlossen werden kann.

Eine andere vorteilhafte Lösung sieht vor, dass das federelastische Element in einer in dem Trägerkörper des Führungseinsatzes vorgesehenen Aufnahmenut angeordnet ist, wobei die Aufnahmenut beispielsweise durch das Führungselement abgeschlossen ist, so dass ebenfalls eine abgeschlossene Kammer für das federelastische Element entsteht.

Um den erfindungsgemäßen Schraubenverdichter besonders geräuscharm betreiben zu können, ist vorzugsweise vorgesehen, dass die elastische Bewegbarkeit der Kolbenstange relativ zum Führungseinsatz quer zur Verschieberichtung geringer ist als das Spiel des in dem Schieberkanal geführten Steuerschiebers quer zur Verschieberichtung.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels eines erfindungsgemäßen Schraubenverdichters;
- Fig. 2: einen Schnitt längs Linie 2-2 in Fig. 1 bei maximaler Verdichterleistung und kleinstem Volumenverhältnis;
- Fig. 3: einen Schnitt längs Linie 3-3 im Bereich einer Positionserfassungseinrichtung;
- Fig. 4: einen Schnitt ähnlich Fig. 2 bei Teillast;
- Fig. 5: einen vergrößerten Schnitt ähnlich Fig. 2 durch ein erstes Ausführungsbeispiel eines Führungseinsatzes für eine Kolbenstange;
- Fig. 6: einen weiter vergrößerten Schnitt ähnlich Fig. 5 durch den Führungseinsatz;
- Fig. 7: einen teilweisen Schnitt durch einen Führungskörper des ersten Ausführungsbeispiels;
- Fig. 8: einen Schnitt ähnlich Fig. 5 bei zur Mittelachse des Führungseinsatzes paralleler Kolbenstange;
- Fig. 9: eine Darstellung ähnlich Fig. 8 bei zur Mittelachse verkippter Kolbenstange;
- Fig. 10: einen teilweisen Schnitt ähnlich Fig. 6 durch ein zweites Ausführungsbeispiel eines Führungseinsatzes und
- Fig. 11: einen teilweisen Schnitt ähnlich Fig. 6 durch ein drittes Ausführungsbeispiel eines Führungseinsatzes.

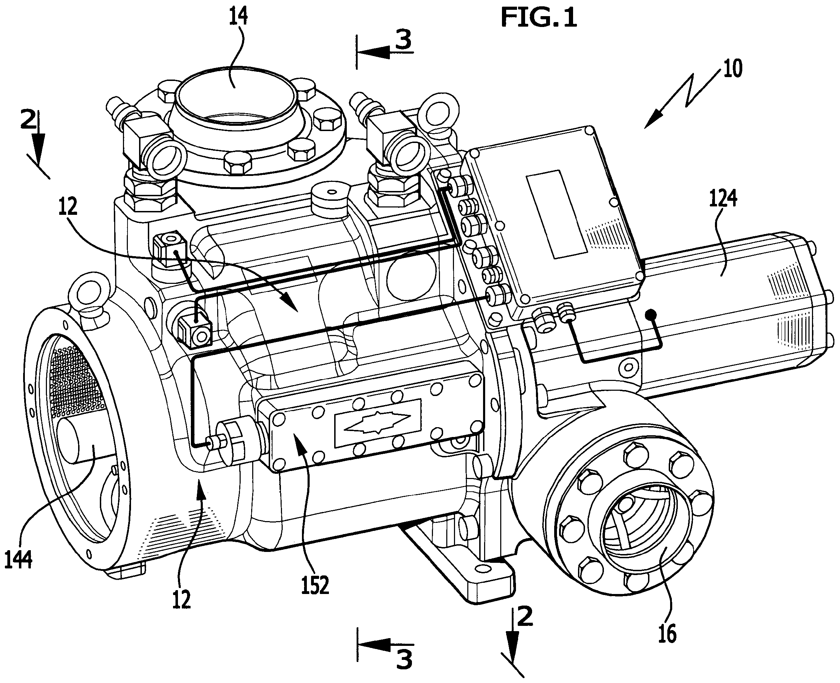

Ein in Fig. 1 dargestelltes Ausführungsbeispiel eines erfindungsgemäßen Schraubenverdichters 10 umfasst ein als Ganzes mit 12 bezeichnetes Verdichtergehäuse, welches einen Sauganschluss 14, über welchen ein anzusaugendes gasförmiges Medium, insbesondere Kältemittel, angesaugt wird, und einen Druckanschluss 16, über welchen das auf Hochdruck verdichtete gasförmige Medium, insbesondere das Kältemittel, abgegeben wird, aufweist.

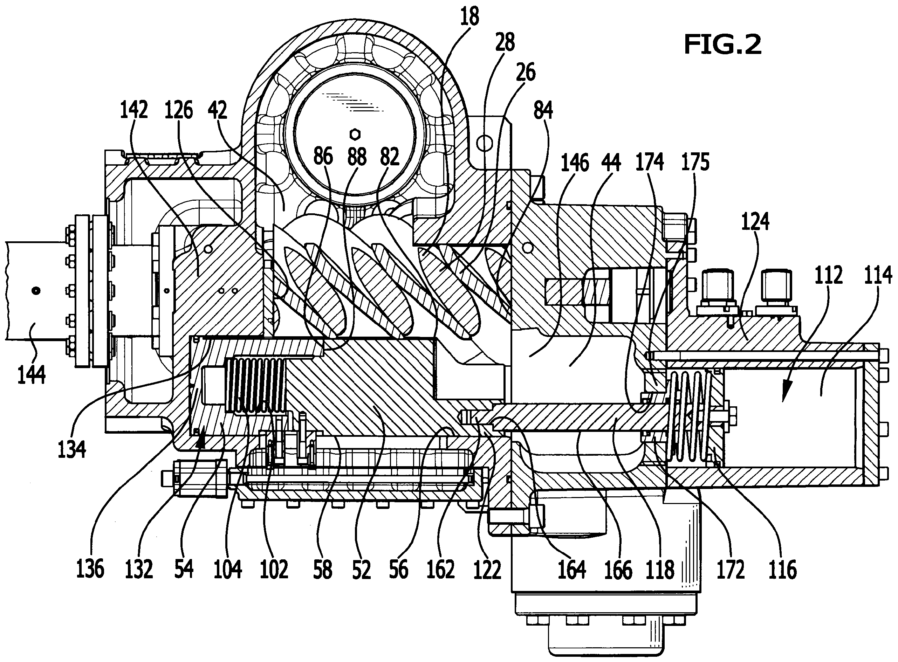

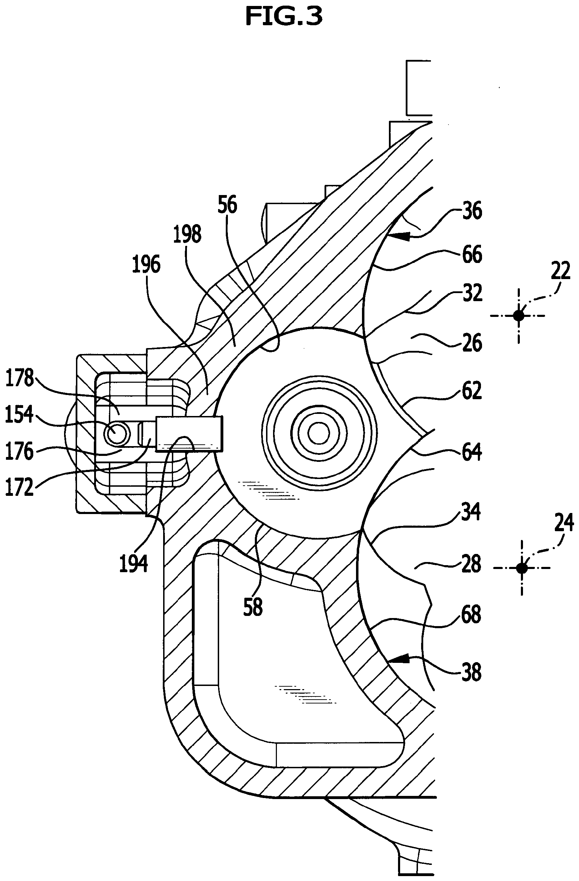

Wie in Fig. 2 und 3 dargestellt, sind in einem Schraubenläuferraum 18 des Verdichtergehäuses 12 zwei jeweils um eine Schraubenläuferachse 22, 24 drehbare Schraubenläufer 26, 28 vorgesehen, die mit ihren Schraubenkonturen 32 und 34 ineinander greifen und mit an diese umfangsseitig angrenzenden Verdichtungswandflächen 36 bzw. 38 des Schraubenläuferraums 18 zusammenwirken, um einem an die Schraubenkonturen 32, 34 saugseitig angrenzenden Niederdruckraum 42 zugeführtes gasförmiges Medium aufzunehmen, zu verdichten und in einen Hochdruckraum 44 im Verdichtergehäuse 12 bei Hochdruck abzugeben.

Dabei wird das gasförmige Medium, insbesondere Kältemittel, in zwischen den Schraubenkonturen 32, 34 und den an diesen angrenzenden Verdichtungswandflächen 36, 38 gebildeten Verdichtungskammern bei Niederdruck in einem Ansaugvolumen eingeschlossen und auf ein Endvolumen bei Hochdruck verdichtet.

Zur Anpassung des Schraubenverdichters 10, beispielsweise an die in einem Kältemittelkreislauf geforderten Betriebsbedingungen, erfolgt eine Anpassung des Betriebszustandes des Schraubenverdichters 10 zum einen hinsichtlich des Volumenverhältnisses, welches die Relation zwischen dem maximal eingeschlossenen Ansaugvolumen und dem ausgeschobenen Endvolumen angibt, und zum anderen hinsichtlich der Verdichterleistung, welche den Anteil des von dem Schraubenverdichter tatsächlich verdichteten Volumenstroms bezogen auf den maximal durch den Schraubenverdichter 10 verdichtbaren Volumenstrom angibt.

Zur Anpassung des Betriebszustandes sind bei einem ersten, in den Fig. 2 bis Fig. 4 dargestellten Ausführungsbeispiel, ein erster Steuerschieber 52 und ein zweiter Steuerschieber 54 in einem im Verdichtergehäuse 12 vorgesehenen Schieberkanal 56 hintereinanderliegend angeordnet, wobei der Schieberkanal 56 parallel zu den Schraubenläuferachsen 22, 24 verläuft und den ersten Steuerschieber 52 und den zweiten Steuerschieber 54 im Bereich ihrer nicht an die Schraubenläufer 26, 28 angrenzenden Führungsumfangsfläche 58 führt.

Der erste Steuerschieber 52 ist dem Hochdruckraum 44 zugewandt und somit hochdruckseitig angeordnet und der zweite Steuerschieber 54 ist relativ zum ersten Steuerschieber 52 niederdruckseitig angeordnet.

Jeder der beiden Steuerschieber 52 und 54 weist ferner noch eine an den Schraubenläufer 26 angrenzende Schieberverdichtungswandfläche 62 und eine an den Schraubenläufer 28 angrenzende Schieberverdichtungswandfläche 64 auf, welche Teilflächen der Verdichtungswandflächen 36 und 38 darstellen, und vom Verdichtergehäuse 12 gebildete Gehäuseverdichtungswandflächen 66 und 68, die ebenfalls Teilflächen der Verdichtungswandflächen 36 und 38 darstellen, zu den Verdichtungswandflächen 36 und 38 ergänzen, die zusammen mit den Schraubenkonturen 32 und 34 zur Bildung der Verdichtungskammern beitragen (Fig. 2).

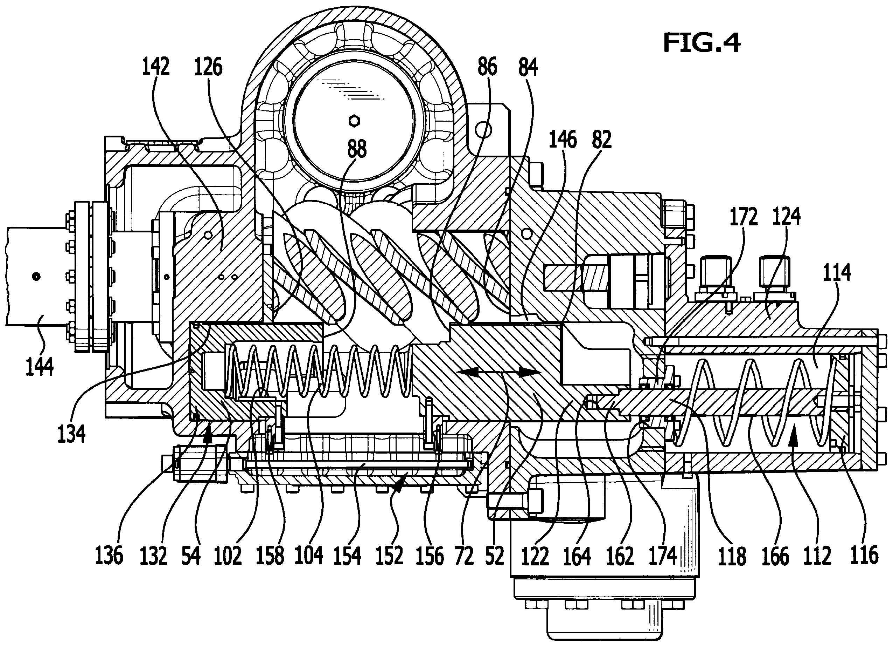

Der erste Steuerschieber 52 und der zweite Steuerschieber 54 sind, wie in Fig. 2 und 4 dargestellt, so ausgebildet, dass sie insoweit, als sie die Schieberverdichtungswandflächen 62 und 64 sowie die Führungsumfangsfläche 58 bilden, identisch sind und somit können sie in einer parallel zu den Schraubenläuferachsen 22, 24 verlaufenden Verschieberichtung 72 verschiebbar im Schieberkanal 56 des Verdichtergehäuses 12 geführt werden.

Dabei bildet der erste Steuerschieber 52 eine dem Hochdruckraum 44 zugewandte, das Endvolumen der Verdichtungskammern festlegende Auslasskante 82, die durch Verschieben des ersten Steuerschiebers 52 in der Verschieberichtung 72 verschiebbar ist und durch ihre Lage relativ zu einer hochdruckseitigen Abschlussfläche 84 des Schraubenläuferraums 18 das Endvolumen der gebildeten Verdichtungskammern und somit das Volumenverhältnis mitbestimmt.

Dieses Prinzip der Schieberanordnung ist bekannt und beispielsweise in der WO 93/18307 beschrieben, auf welche hinsichtlich der Beschreibung des Funktionsprinzips verwiesen wird.

Wie in den Fig. 2 und 4 dargestellt, weisen der erste Steuerschieber 52 und der zweite Steuerschieber 54 einander zugewandte Stirnflächen 86 und 88 auf, mit denen diese, wie beispielsweise in Fig. 2 dargestellt, so aneinander anlegbar sind, dass die Schieberverdichtungswandflächen 62 und 64 des ersten Steuerschiebers 52 und des zweiten Steuerschiebers 54 ineinander übergehen.

Ferner sind der erste Steuerschieber 52 und der zweite Steuerschieber 54 im Schieberkanal 56 relativ zueinander verschiebbar.

Vorzugsweise ist noch in einem Innenraum 102 des zweiten Steuerschiebers 54 eine Druckfeder 104 vorgesehen, welche dazu dient, den ersten Steuerschieber 52 relativ zum zweiten Steuerschieber 54 so zu beaufschlagen, dass die Stirnflächen 86 und 88 voneinander weg bewegbar sind.

Zum Verschieben des ersten Steuerschiebers 52 ist, wie in Fig. 2 und 4 dargestellt, eine Zylinderanordnung 112 vorgesehen, die eine Zylinderkammer 114 und einen Kolben 116 umfasst, wobei der Kolben 116 mit einer Kolbenstange 118 verbunden ist, welche eine Verbindung zum ersten Steuerschieber 52 herstellt und zwar beispielsweise mit einem Fortsatz 122 des ersten Steuerschiebers 52, welcher zum Beispiel auf einer der Stirnfläche 86 gegenüberliegenden Seite desselben angeordnet ist.

Ferner liegt die Zylinderanordnung 112 insbesondere auf einer dem zweiten Steuerschieber 54 gegenüberliegenden Seite des ersten Steuerschiebers 52, vorzugsweise in einem hochdruckseitigen Gehäuseabschnitt 124 des Verdichtergehäuses 12, welcher im Anschluss an den Schieberkanal 56 und im Anschluss an den Hochdruckraum 44 und somit auf einer dem Niederdruckraum 42 gegenüberliegenden Seite des Verdichtergehäuses 12 angeordnet ist.

Der zweite Steuerschieber 54 ist durch eine Zylinderanordnung 132 verschiebbar, welche einen in einer Zylinderkammer 134 bewegbaren Kolben 136 umfasst, wobei die Zylinderkammer 134 sich insbesondere in Fortsetzung des Schieberkanals 56 in einem niederdruckseitigen Gehäuseabschnitt 142 erstreckt, in welchem antriebsseitige Lagereinheiten für die Schraubenläufer 26 und 28 angeordnet sind, die beispielsweise über eine Antriebswelle 144 antreibbar sind.

Insbesondere ist der Kolben 136 einstückig an den zweiten Steuerschieber 54 angeformt und weist eine Kolbenfläche auf, die mindestens der Querschnittsfläche des zweiten Steuerschiebers 54 entspricht.

Der niederdruckseitige Gehäuseabschnitt 142, welcher die Zylinderkammer 134 für die Zylinderanordnung 132 zum Bewegen des zweiten Steuerschiebers 54 aufnimmt, liegt in einem Bereich des Verdichtergehäuses 12, der dem hochdruckseitigen Gehäuseabschnitt 124 zur Aufnahme der Zylinderkammer 114 für die Zylinderanordnung 112 gegenüberliegend angeordnet ist.

Der erste Steuerschieber 52 und der zweite Steuerschieber 54 lassen sich durch die Zylinderanordnungen 112 und 132 soweit zusammenschieben, dass die Stirnflächen 86 und 88 in einer Verbundstellung aneinander anliegen (Fig. 2), und die beiden Steuerschieber 52, 54 lassen sich auch in der Verbundstellung gemeinsam wie ein einziger Steuerschieber bewegen, welcher sich von der saugseitigen Abschlussfläche 126 in Richtung der druckseitigen Abschlussfläche 84 erstreckt und dessen Auslasskante 82 zur Festlegung des Volumenverhältnisses beiträgt, wobei, wie in Fig. 2 dargestellt, der Schraubenverdichter 10 in dieser Verbundstellung stets den maximalen Volumenstrom fördert.

Je nach Lage der Auslasskante 82 relativ zur Abschlussfläche 84 lässt sich das Volumenverhältnis anpassen, das mit zunehmend geringer werdendem Abstand der Auslasskante 82 von der Abschlussfläche 84 ansteigt und seinen Maximalwert dann erreicht, wenn die Abschlusskante 82 den für die Minimierung des Endvolumens erforderlichen geringsten Abstand von der Abschlussfläche 84 aufweist.

Soll nun die Verdichterleistung, d.h. der tatsächlich geförderte Volumenstrom, zusätzlich variieren, so erfolgt, wie beispielsweise in Fig. 4 dargestellt, ein Trennen der Stirnflächen 86 und 88 durch Auseinanderbewegen der Steuerschieber 52 und 54 in eine Trennstellung. In der Trennstellung ist der zweite Steuerschieber 54 wirkungslos und somit legt in der Trennstellung die Lage der Stirnfläche 86 des ersten Steuerschiebers 52 das Anfangsvolumen fest.

Solange die Auslasskante 82 nicht in einer Stellung steht, in welcher diese das minimal mögliche Endvolumen vorgibt, ist jedoch die Relation des Anfangsvolumens, vorgegeben durch die Stirnfläche 86, zum Endvolumen, vorgegeben durch die Auslasskante 82, nicht variabel.

Wenn jedoch der erste Steuerschieber 52, wie in Fig. 4 dargestellt, so weit in Richtung des Hochdruckraums 44 verschoben wird, dass die Auslasskante 82 den minimalen Abstand von der Abschlussfläche 84 aufweist oder sogar über diese hinaus in einen vom Hochdruckraum 44 umfassten Einfahrraum 146 für den ersten Steuerschieber 52 verschoben wird, ist eine Variation des Anfangsvolumens 86 möglich, ohne dass sich das Endvolumen verändert, da dieses dann stets minimal bleibt.

Um die Wirkung des zweiten Steuerschiebers 54 in der Trennstellung zu eliminieren, wird dieser insbesondere mittels der Zylinderanordnung 132 in den Gehäuseabschnitt 142 eingefahren, wobei die Zylinderkammer 134 so dimensioniert ist, dass diese gleichzeitig einen Einfahrraum 148 für den zweiten Steuerschieber 54 umfasst und somit die Möglichkeit schafft, den zweiten Steuerschieber 54 so weit von dem ersten Steuerschieber 52 wegzubewegen, dass die Stirnfläche 88 das Anfangsvolumen nicht mehr beeinflusst.

Der zweite Steuerschieber 54 erlaubt somit, das Anfangsvolumen dadurch zu beeinflussen, dass dieser entweder zur Bildung der Verbundstellung der Steuerschieber 52, 54 mit seiner Stirnfläche 88 an der Stirnfläche 86 des ersten Steuerschiebers 52 anliegt und somit das Anfangsvolumen maximiert oder mit seiner eigenen Stirnfläche 88 so weit von der Stirnfläche 86 des ersten Steuerschiebers 52 weg bewegt werden kann, dass keinerlei Beeinflussung des Anfangsvolumens durch den zweiten Steuerschieber 54 mehr erfolgt.

Zur Erfassung der Positionen des ersten Steuerschiebers 52 und des zweiten Steuerschiebers 54 ist eine als Ganzes mit 152 bezeichnete Positionserfassungseinrichtung vorgesehen, welche ein sich parallel zur Verschieberichtung 72 der Steuerschieber 52, 54 und somit parallel zu den Schraubenläuferachsen 22, 24 sich erstreckendes Detektorelement 154 umfasst, welches in der Lage ist, die Positionen von Positionsanzeigeelementen 156 und 158 zu erfassen.

Der erste Steuerschieber 52, ist wie in Fig. 2 und 4 dargestellt, vorzugsweise starr mit der Kolbenstange 118 verbunden, die beispielsweise mittels eines Gewindezapfens 162 in einer Gewindebohrung 164 im ersten Steuerschieber 52 eingreift, so dass dadurch eine starre Fixierung der Kolbenstange 118 relativ zu dem ersten Steuerschieber 52 erfolgt.

Insbesondere sitzt die Gewindebohrung 164 für den Gewindezapfen 162 in dem Fortsatz 122 des ersten Steuerschiebers 52.

Ferner ist die Kolbenstange 118 mit einer sich parallel zur Verschieberichtung 72 verlaufenden Umfangsfläche 166 versehen, welche gleitend in einem Führungseinsatz 172 geführt ist, der seinerseits wiederum in einer Führungseinsatzaufnahme 174 sitzt, welche in einer den hochdruckseitigen Gehäuseabschnitt 124 tragenden Wand 175 angeordnet und somit fest mit dem Gehäuseabschnitt 124 verbunden ist.

Der Führungseinsatz 172 stellt dabei die alleinige präzise Führung der Kolbenstange 118 relativ zu den Gehäuseabschnitten 142 und 124 dar und somit eine präzise Führung des ersten Steuerschiebers 52 relativ zu den Gehäuseabschnitten 142, 124, die zusätzlich zu der Führung des ersten Steuerschiebers 52 im Schieberkanal 56 erfolgt.

Insgesamt ist somit der mit Spiel in dem Schieberkanal 56 geführte erste Steuerschieber 52 durch die präzise Führung der Kolbenstange 118 mittels des Führungseinsatzes 172 relativ zu den Gehäuseabschnitten 142 und 124 und somit relativ zum Verdichtergehäuse 12 geführt, so dass eine durch das Spiel der Führung des ersten Steuerschiebers 52 in dem Schieberkanal 56 eventuell mögliche Geräuschbildung, insbesondere ein Rattern, beim Betrieb des erfindungsgemäßen Schraubenverdichters vermieden werden kann, da die Führung der Kolbenstange 118 mittels des Führungseinsatzes 172 eine geringere Bewegung quer zur Verschieberichtung 72 zulässt als das Spiel des ersten Steuerschiebers 52 im Schieberkanal 56 beträgt, und dadurch die Führung des ersten Steuerschiebers 52 verbessert.

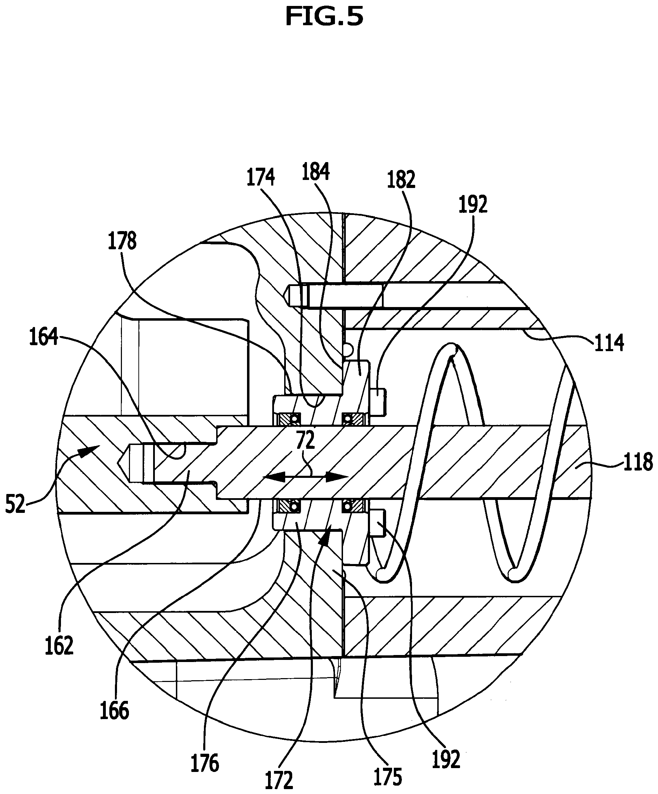

Ein erstes Ausführungsbeispiel des Führungseinsatzes 172 umfasst, wie in den Fig. 5 bis 9 dargestellt, einen Trägerkörper 176, welcher einerseits eine zylindrische Mandelfläche 178 aufweist, mit welcher der Trägerkörper 176 in der Führungseinsatzaufnahme 174 sitzt und durch die Führungseinsatzaufnahme 174 quer zur Verschieberichtung 72 positioniert ist.

Ferner umfasst der Trägerkörper 176 einen radial über die zylindrische Mantelfläche 178 überstehenden Flanschkörper 182, welcher eine senkrecht zur Mantelfläche 178 verlaufende und sich radial an die zylindrische Mantelfläche 178 anschließende Flanschfläche 184 aufweist, die an der die Führungseinsatzaufnahme 172 tragenden Wand 175 des hochdruckseitigen Gehäuseabschnitts 124 anlegbar ist und beispielsweise mittels Bohrungen 188 im Flanschkörper 182 durchsetzende Schrauben 192 an der Wand 175 fixierbar ist, so dass insgesamt der Trägerkörper 172 fest mit der Wand 175 verbunden ist.

Der Trägerkörper 176 wird durchsetzt von einem Durchlass 202 der einen größeren Querschnitt aufweist als die Kolbenstange 118, so dass die Kolbenstange 118 berührungsfrei zu einer Innenfläche 206 des Durchlasses 202 durch diesen hindurchgeführt werden kann.

Die Innenfläche 206 des Durchlass 202 verläuft dabei insbesondere zu einer zur Verschieberichtung 72 parallel verlaufenden Mittelachse 204 des Durchlasses 202 zylindrisch, wobei deren Durchmesser größer ist als der Durchmesser der Kolbenstange 118, so dass die Kolbenstange 118 berührungsfrei zur zylindrischen Innenfläche 206 durch den Durchlass 202 hindurchgeführt werden kann.

Beiderseits des Durchlasses 202 ist der Trägerkörper 176 mit stufenförmig ausgebildeten Ringnuten 212 und 214 versehen, die zum Einen eine zylindrisch zur Mittelachse 204 verlaufende Nutgrundfläche 216 und 218 aufweisen sowie auf einander zugewandten Seiten durch Seitenflächen 222, 224 begrenzt sind, während die Ringnuten 212, 214 auf ihren einander abgewandten Seiten keine Seitenflächen aufweisen und somit offen sind, allerdings sind auf diesen Seiten Absätze 226, 228 vorgesehen.

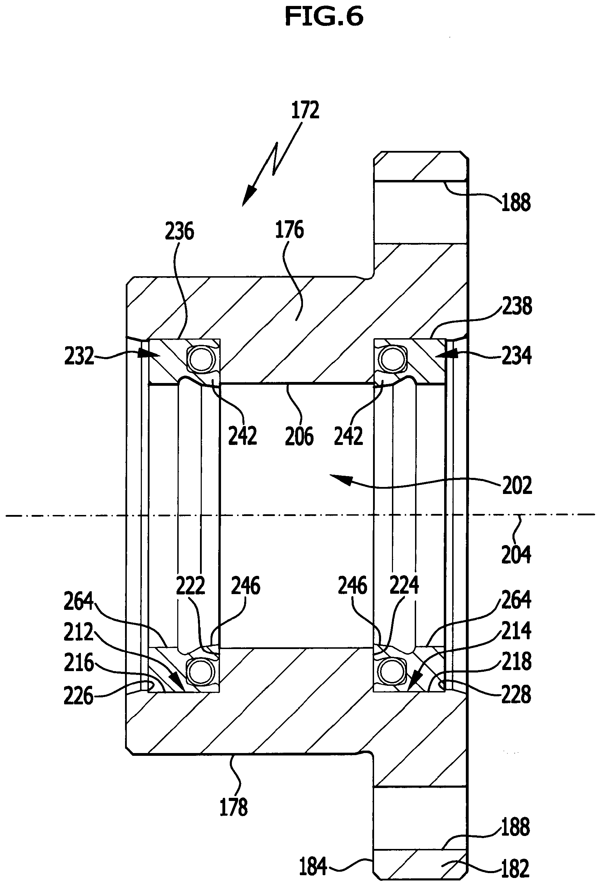

In den Ringnuten 212, 214 sitzen, wie in Fig. 6 dargestellt, Führungskörper 232, 234 die mit ihren zylindrischen Außenflächen 236, 238 an den Nutgrundflächen 216, 218 anliegen und somit in Richtung quer zur Mittelachse 204 zentriert in dem Trägerkörper 176 angeordnet sind, und außerdem durch die Seitenflächen 222 und 224 sowie die Absätze 226 und 228 gegen Bewegungen in Richtung der Mittelachse 204 fixiert sind.

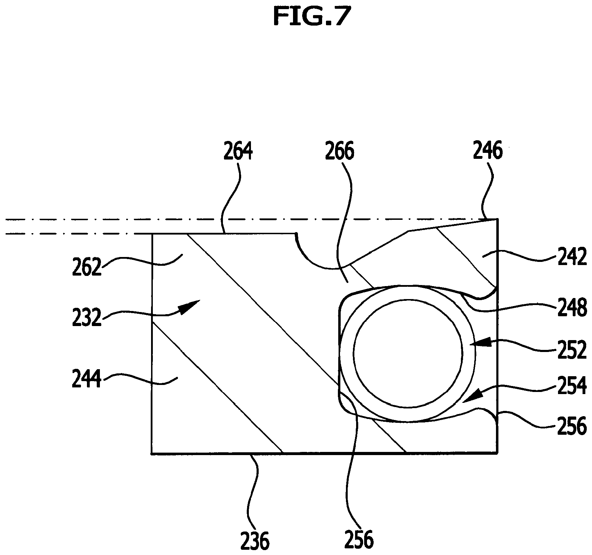

Jeder der Führungskörper 232, 234 weist, wie exemplarisch am Führungskörper 232 in Fig. 7 dargestellt, ein radial innen liegendes und der Mittelachse 204 zugewandtes Führungselement 242 auf, welches beispielsweise von einer Basis 244 des Führungskörpers 232 ausgehend in Form einer ringförmig um die Mittelachse 204 verlaufenden Lippe ausgebildet ist, und eine Führungsfläche 246 bildet, welche an der Umfangsfläche 166 der Kolbenstange 118 im eingebauten Zustand spaltfrei anliegt, sich jedoch relativ zu der Basis 244 quer zur Verschieberichtung 72 und somit sich auch radial zur Mittelachse 204 elastisch bewegen kann.

Zur Vorspannung des Führungselements 242 ist dieses auf einer der Führungsfläche 246 gegenüberliegenden Umfangsfläche 248 mit einem federelastischen Element 252 beaufschlagt, welches beispielsweise als Ringfeder ausgebildet ist, die in einer ringförmig um die Mittelachse 204 verlaufenden und sich in Richtung parallel zur Mittelachse 204 erstreckenden Aufnahmenut 254 im jeweiligen Führungskörper 232 angeordnet ist, wobei eine Seitenwand der Aufnahmenut 244 durch die Umfangsfläche 248 des Führungselements 242 begrenzt ist und wobei sich die Aufnahmenut 254 vorzugsweise von einer der jeweiligen Seitenfläche 222 beziehungsweise 224 der jeweiligen Ringnut 212, 214 zugewandten ringförmigen Nutöffnung 256 in den Führungskörper 232 beziehungsweise 234 in einer zur Mittelachse 204 parallelen Ausdehnungsrichtung in den Führungskörper 232 beziehungsweise 234 bis zu einem Nutgrund 256 hinein erstreckt, so dass die die Umfangsfläche 248 des Führungselements 242 bildende seitliche Wand der Aufnahmenut 254 ungefähr parallel zur Verschieberichtung 72 verläuft, wobei unter einem ungefähr parallelen Verlauf ein Verlauf mit einer Winkelabweichung von bis zu ± 20° zu verstehen ist.

Zusätzlich umfasst der Führungskörper 232 ein vom Basiskörper 244 getragenes Begrenzungselement 262, welches eine gegenüber der Führungsfläche 246 zurückgesetzte Begrenzungsfläche 264 trägt.

Dabei ist die Begrenzungsfläche 264 durch das Begrenzungselement 262 und die Basis 244 des Führungskörpers 232 relativ zur Außenfläche 236 unelastisch angeordnet, und dient zur Festlegung einer Maximalbewegung der Kolbenstange 118 quer zur Verschieberichtung 72 radial zur Mittelachse 204 unter elastischer Deformation des Führungselements 242.

Vorzugsweise ist das Führungselement 242 einstückig an die Basis 244 angeformt und auch das Begrenzungselement 262 ist einstückig an die Basis 244 des jeweiligen Führungskörpers 232 angeformt.

Dabei lässt sich der Führungskörper 232 beziehungsweise 234 vorzugsweise aus einem insbesondere Kohleanteile aufweisenden Kunststoffmaterial, beispielsweise PTFE oder Fluorkohlenstoffverbindungen, herstellen, das im Falle der Basis 244 und dem von der Basis 244 getragenen Begrenzungselement 262 radial zur Mittelachse im Wesentlichen unelastisch ist, jedoch aufgrund eines zwischen der Basis 244 und dem Führungselement 242 verdünnten Wandabschnitts 266 eine elastische Bewegbarkeit des Führungselements 242 relativ zur Basis 244 ermöglicht.

Ein derartiges Kohleanteile aufweisendes Kunststoffmaterial lässt sich insbesondere hinsichtlich des Härtegrades der Gleiteigenschaften und der Verschleißbeständigkeit in geeigneter Weise konfigurieren.

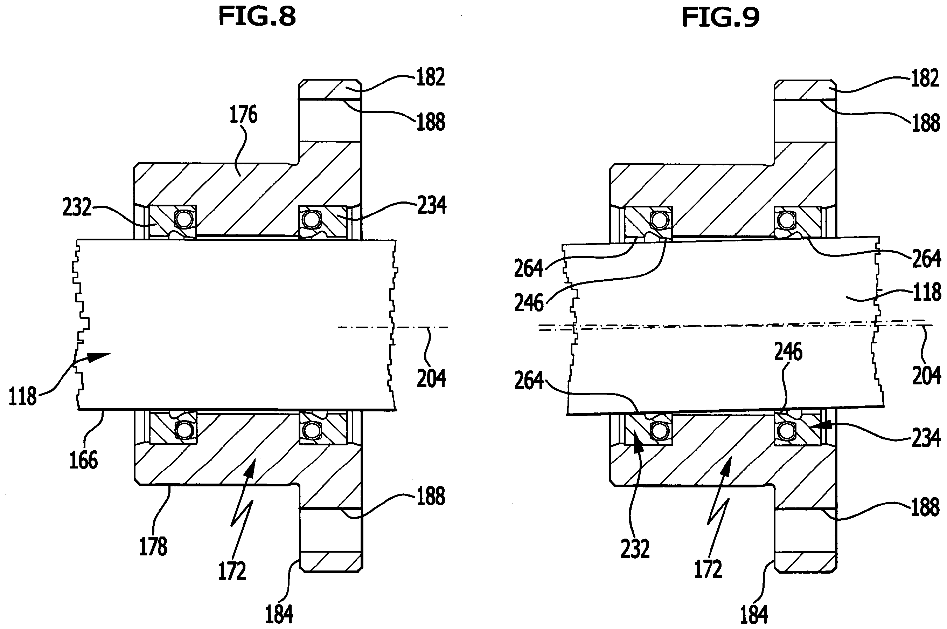

Durch das das Führungselement 242 in Richtung radial zur Mittelachse 204 beaufschlagende federelastische Element 252 liegt, wie beispielsweise in Fig. 8 dargestellt, die Führungsfläche 246 spaltfrei an der Umfangsfläche 166 der Kolbenstange 118 an und bewirkt eine präzise Führung der Kolbenstange 118 relativ zum Führungseinsatz 172 der wiederum fest mit der Wand 175 verbunden ist, so dass dadurch eine präzise Führung der Kolbenstange 118 durch die zwei in der Verschieberichtung 72 im Abstand von einander angeordneten Führungskörpern 232, 234 mit den Führungselementen 242 erfolgt, wie ebenfalls in Fig. 8 dargestellt ist.

Allerdings haben die Führungselemente 242 in radialer Richtung zur Mittelachse 204 die Möglichkeit, auszuweichen, um eine geringfügige Verkippung der Kolbenstange 118 bezogen auf die Mittelachse 204, beispielsweise bedingt durch das Spiel des ersten Steuerschiebers 52 in dem Schieberkanal 56, zuzulassen, wobei die Bewegung der Kolbenstange 118 im Sinne eines Verkippens relativ zur Mittelachse 204 durch die Begrenzungsflächen 264 der Begrenzungselemente 262 der Führungskörper 232 beziehungsweise 234 begrenzt wird, so dass das Maß der Verkippung der Kolbenstange 118 relativ zur Mittelachse 204 durch die radiale Lage der Begrenzungsflächen 264 relativ zur Mittelachse 204 bei dem entsprechenden Abstand zwischen den Begrenzungsflächen 264 in der Verschieberichtung 72 durch die radiale Lage der Begrenzungsflächen 264 relativ zur Mittelachse 204 festgelegt werden kann.

Dabei wird die Elastizität der Führungselemente 242 in radialer Richtung zur Mittelachse 204 nicht beeinträchtigt, jedoch deren mögliche Bewegung in radialer Richtung zur Mittelachse 204 durch die Begrenzungsflächen 264 begrenzt.

Somit kann mittels der durch die federelastischen Elemente 252 radial in Richtung zur Mittelachse 204 vorgespannten und elastisch bewegbaren Führungselemente 242 einerseits eine spaltfreie Führung der Kolbenstange 118 relativ zu dem Führungseinsatz 172 erreicht werden, die Schwingungen der Kolbenstange 118 dämpft, und gleichzeitig durch das elastische Ausweichen der Führungselemente 242 bei einem geringfügigen Verkippen der Kolbenstange 118 relativ zur Mittelachse 204 ein Verkanten der Kolbenstange 118 in dem Führungseinsatz 172 unterbunden werden, wobei außerdem durch die Begrenzungsflächen 264 der Begrenzungselemente 262 die maximal mögliche Verkippung der Kolbenstange 118 begrenzt wird, so dass das elastische Ausweichen des Führungselements 242 in radialer Richtung zur Mittelachse 204 nur in einem eingeschränkten Umfang möglich ist, um die geforderte Präzision bei der Führung der Kolbenstange 118 einzuhalten.

Dadurch, dass das federelastische Element 252 in der ringförmig um die Mittelachse verlaufenden Aufnahmenut 254 im Trägerkörper 176 angeordnet ist und die Aufnahmenut 254 eine der Seitenfläche 222 beziehungsweise 224 der jeweiligen Ringnut 212, 214 jeweils zugewandte ringförmige Nutöffnung 256 aufweist, ist bei in den Trägerkörper 176 des Führungseinsatzes 172 eingesetzten Führungskörpern 232, 234 die jeweilige Nutöffnung 256 durch die entsprechende Seitenfläche 222 beziehungsweise 224 der Ringnut 212, 214 verschlossen, so dass dadurch das elastische Element 252 in dem Führungseinsatz 172 gekapselt angeordnet und somit gegen Einwirkungen von Schmutz und Medien geschützt ist, und darüber hinaus ist auch der Schraubenverdichter gegen einen Bruch im federelastischen Element 252 geschützt, da bei einem Bruch des federelastischen Elements 152 entstehende Partikel nicht den Führungseinsatz 172 verlassen können.

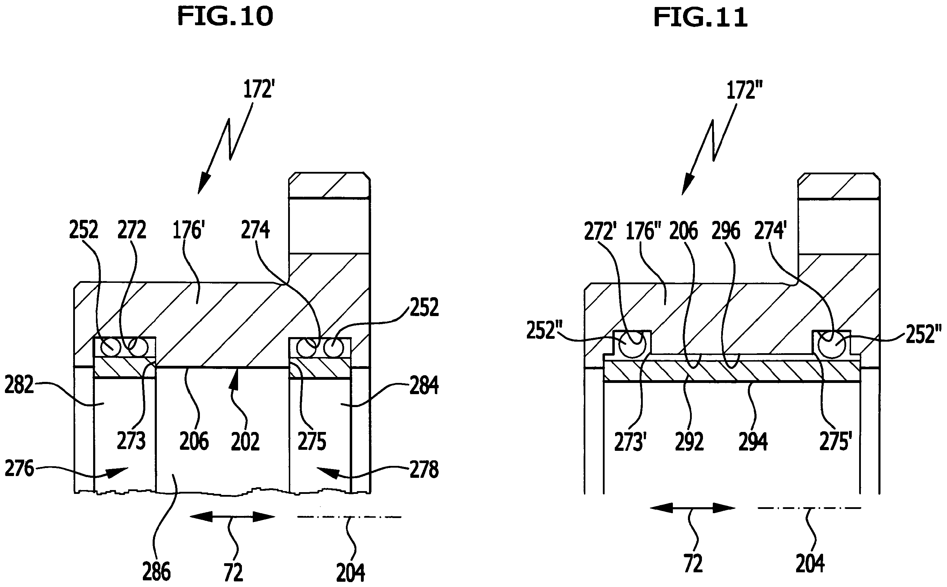

Bei einem zweiten Ausführungsbeispiel eines erfindungsgemäßen Führungseinsatzes 172', dargestellt in Fig. 10, ist der Trägerkörper 176 mit sich radial zur Mittelachse 204 ausgehend von der Innenfläche 206 in diesen hineinerstreckenden und in der Verschieberichtung um Abstand voneinander angeordneten Aufnahmenuten 272, 274 versehen, in welchen federelastische Elemente 252 angeordnet sind, die beispielsweise in diesem Fall als O-Ringe aus einem gummielastischen Material ausgebildet sind.

Die Aufnahmenuten 272, 274 sind daher mit einer der Mittelachse 204 zugewandten Nutöffnung 273 beziehungsweise 275 versehen und in diese Nutöffnungen 273, 275 sind ringförmige Führungselemente 276, 278 eingesetzt, welche einerseits die Nutöffnungen 273, 275 verschließen und andererseits der Mittelachse 204 zugewandte Führungsflächen 282, 284 aufweisen.

Die Führungselemente 276, 278 sind ihrerseits aus einem elastischen Material hergestellt und somit durch die federelastischen Elemente 252 radial zur Mittelachse 204 in Richtung der Mittelachse 204 beaufschlagt, so dass diese mit ihren Führungsflächen 282, 284 an der Umfangsfläche 166 der Kolbenstange 118 ebenfalls spaltfrei angelegt sind.

Die Führungselemente 276, 278 sind dabei relativ zum Trägerkörper 176' durch die in den Aufnahmenuten 272, 274 angeordneten federelastischen Elemente 252 an dem Trägerkörper 176' abgestützt und haben dadurch die Möglichkeit, sich radial zur Mittelachse 204 zu bewegen, um bei einer Verkippung der Kolbenstange 118 relativ zur Mittelachse 204 ein Verkanten der Kolbenstange 118 zu verhindern.

Die Verkippung der Kolbenstange 118 relativ zur Mittelachse 204 wird in diesem Fall durch die eine Begrenzungsfläche 286 darstellende Innenfläche 206 des Durchlasses 202 begrenzt, so dass in gleicher Weise wie im Zusammenhang mit dem ersten Ausführungsbeispiel beschrieben, durch das elastische Ausweichen der Führungselemente 276, 278 zur Verhinderung eines Verkantens der Kolbenstange 118 insgesamt die Präzision der Führung der Kolbenstange 118 zur Führung des ersten Steuerschiebers 52 in dem Schieberkanal 56 nicht beeinträchtigt ist.

Im Übrigen sind diejenigen Elemente des zweiten Ausführungsbeispiels, die mit dem des voranstehenden ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Bei einem dritten Ausführungsbeispiel, dargestellt in Fig. 11, ist der Trägerkörper 176" des Führungseinsatzes 172" ebenfalls mit sich radial von der Mittelachse 204 weg in den Trägerkörper 176" hinein erstreckenden Aufnahmenuten 272', 274' versehen, wobei Nutöffnungen 273, 275 der in der Verschieberichtung 72 im Abstand voneinander angeordneten Ringnuten 212", 214" durch ein Führungselement 292 verschlossen sind, das sich nicht nur über die Nutöffnungen 272" und 274" sondern von der einen Nutöffnung 272" bis zur anderen Nutöffnung 274" erstreckt und eine insgesamt durchgehende Führungsfläche 294 bildet.

In den Aufnahmenuten 272', 274' sitzen in gleicher Weise wie beim ersten und zweiten Ausführungsbeispiel elastische Elemente 252", die das Führungselement 292 ebenfalls radial zur Mittelachse 204 in Richtung auf die Mittelachse 204 beaufschlagen und dazu führen, dass das Führungselement 292 mit seiner Führungsfläche 294 zumindest in den Bereichen, in denen die elastischen Elemente 252" wirksam sind, spaltfrei an der Umfangsfläche 166 der Kolbenstange 118 anliegt.

Auch bei diesem Ausführungsbeispiel ist das Führungselement 292 vorzugsweise aus einem elastischen Material ausgebildet und lässt sich daher in radialer Richtung durch die Beaufschlagung mittels der elastischen Elemente 252" deformieren, so dass das Führungselement 292 ebenfalls mit der Führungsfläche 294 spaltfrei an der Umfangsfläche 166 der Kolbenstange 118 angelegt werden kann.

Bei dem dritten Ausführungsbeispiel erfolgt eine Begrenzung der Bewegung des Führungselements 292 quer zur Verschieberichtung 72 dadurch, dass die zwischen den Aufnahmenuten 272', 274' liegende Innenfläche 206 eine Begrenzungsfläche 296 für die Bewegung des Führungselements 292 quer zur Verschieberichtung 72 bildet und somit im Gegensatz zu den voranstehenden Ausführungsbeispielen nicht auf die Umfangsfläche 166 der Kolbenstange 118 direkt einwirkt, sondern über das Führungselement 292.

Auch in diesem Fall sind die elastischen Elemente 252" in den Ringnuten 212" beziehungsweise 214" gekapselt angeordnet, um diese einerseits gegen die Einwirkung von Schmutz und Medien zu schützen und andererseits aber auch den Schraubenverdichter vor Partikeln zu schützen, die gegebenenfalls bei einem Bruch oder einer teilweisen Zerstörung der elastischen Elemente 252" auftreten könnten.

Im Übrigen sind diejenigen Elemente des dritten Ausführungsbeispiels, die mit dem der voranstehenden Ausführungsbeispiele identisch sind, mit denselben Bezugszeichen versehen, so dass hinsichtlich der Beschreibung derselben vollinhaltlich auf die Ausführungen zum ersten Ausführungsbeispiel Bezug genommen werden kann.

## Patentansprüche

1. Schraubenverdichter (10) umfassend ein Verdichtergehäuse (12) mit einem in diesem angeordneten Schraubenläuferraum (18), zwei in dem Schraubenläuferraum (18) angeordnete und an dem Verdichtergehäuse (12) jeweils um eine Schraubenläuferachse (22, 24) drehbar gelagerte Schraubenläufer (26, 28), die mit ihren Schraubenkonturen (32, 34) ineinandergreifen und jeweils mit an diese angrenzenden und diese teilweise umschließenden Verdichtungswandflächen (36, 38) zusammenwirken, um über einen im Verdichtergehäuse (12) angeordneten Niederdruckraum (42) zugeführtes gasförmiges Medium aufzunehmen und im Bereich eines im Verdichtergehäuse (12) angeordneten Hochdruckraums (44) abzugeben, wobei das gasförmige Medium in zwischen den Schraubenkonturen (32, 34) und an diesen angrenzenden Verdichtungswandflächen (36, 38) gebildeten Verdichtungskammern bei Niederdruck mit einem Ansaugvolumen eingeschlossen und auf ein Endvolumen bei Hochdruck komprimiert wird, sowie mindestens einen in einem Schieberkanal (56) des Verdichtergehäuses (12) angeordneten und an beide Schraubenläufer (26, 28) mit Schieberverdichtungswandflächen (62, 64) angrenzenden Steuerschieber (52, 54), welcher in einer Verschieberichtung (72) parallel zu den Schraubenläuferachsen (22, 24) bewegbar und das Endvolumen und/oder das Anfangsvolumen beeinflussend ausgebildet ist, welcher starr mit einer Kolbenstange (118) verbunden ist, die zu einer Zylinderanordnung (112) zur Bewegung des mindestens einen Steuerschiebers (52) führt, und welcher mittels einem die Kolbenstange (118) in der Verschieberichtung (72) bewegbar aufnehmenden Führungseinsatz (172) relativ zu dem Verdichtergehäuse (12) geführt ist,
**dadurch gekennzeichnet, dass** in dem Führungseinsatz (172) die Kolbenstange (118) mittels eines Führungselements (242, 276, 278, 292) quer zur Verschieberichtung (72) elastisch nachgiebig geführt ist.

2. Schraubenverdichter nach Anspruch 1, **dadurch gekennzeichnet, dass** das Führungselement (242, 276, 278, 292) quer zur Verschieberichtung (72) relativ zum Trägerkörper (176) des Führungseinsatzes (172) elastisch bewegbar ist.

3. Schraubenverdichter nach Anspruch 1, **dadurch gekennzeichnet, dass** das Führungselement (242, 276, 278, 292) in Richtung einer Umfangsfläche (166) der Kolbenstange (118) elastisch vorgespannt an der Umfangsfläche (166) anliegt.

4. Schraubenverdichter nach einem der voranstehenden Ansprüche,
**dadurch gekennzeichnet, dass** das Führungselement (242, 276, 278, 292) mit mindestens einer spaltfrei an einer Umfangsfläche (166) der Kolbenstange (118) anliegenden Führungsfläche (246, 282, 284, 294) für die Kolbenstange (118) versehen ist, und dass die Führungsfläche (246, 282, 284, 294) quer zur Verschieberichtung (72) relativ zu einem Trägerkörper (176) des Führungseinsatzes (172) elastisch bewegbar ist.

5. Schraubenverdichter nach einem der voranstehenden Ansprüche,
**dadurch gekennzeichnet, dass** das mindestens eine Führungselement (242) durch einen relativ zum Trägerkörper (176) des Führungseinsatzes (172) bewegbaren Führungsbereich eines Führungskörpers (232, 234) gebildet ist, insbesondere, dass der Führungskörper (232, 234) mit einer Basis (244) festsitzend in dem Trägerkörper (176) des Führungseinsatzes (172) angeordnet ist, insbesondere, dass das mindestens eine Führungselement (276, 278, 292) von dem Führungskörper (232, 234) geführt und relativ zu dem Trägerkörper (176) des Führungseinsatzes (172) bewegbar ist.

6. Schraubenverdichter nach einem der voranstehenden Ansprüche, **dadurch gekennzeichnet, dass** die Kolbenstange (118) durch mehrere in der Verschieberichtung (72) im Abstand voneinander angeordnete Führungselemente (242, 276, 278) geführt ist.

7. Schraubenverdichter nach einem der voranstehenden Ansprüche, **dadurch gekennzeichnet, dass** das Führungselement (242, 276, 278, 292) durch ein dieses beaufschlagendes federelastisches Element (252) in Richtung der Umfangsfläche (166) der Kolbenstange (118) vorgespannt ist, insbesondere, dass das federelastische Element (252) das Führungselement (242, 276, 278, 292) auf einer der Kolbenstange (118) abgewandten Seite beaufschlagt, und/oder insbesondere, dass das mindestens eine Führungselement (242, 276, 278, 292) durch das federelastische Element (252) abgestützt ist.

8. Schraubenverdichter nach einem der voranstehenden Ansprüche, **dadurch gekennzeichnet, dass** das federelastische Element (252) das Führungselement (242, 276, 278, 292) auf einer der Kolbenstange (118) abgewandten Seite relativ zum Trägerkörper (176) des Führungseinsatzes (172) abstützend ausgebildet ist.

9. Schraubenverdichter nach Anspruch 7 oder 8, **dadurch gekennzeichnet, dass** das mindestens eine Führungselement (276, 278, 292) durch zwei in der Verschieberichtung (72) im Abstand voneinander angeordnete federelastische Elemente (252) relativ zum Führungseinsatz (172) abgestützt ist.

10. Schraubenverdichter nach einem der voranstehenden Ansprüche, **dadurch gekennzeichnet, dass** das federelastische Element (252) das Führungselement (242, 276, 278, 292) umschließend ausgebildet ist.

11. Schraubenverdichter nach einem der Ansprüche 7 bis 10, **dadurch gekennzeichnet, dass** das federelastische Element (252) als das Führungselement (242) auf einer der Kolbenstange (118) abgewandten Seite umschließender Ringkörper ausgebildet ist.

12. Schraubenverdichter nach einem der Ansprüche 7 bis 11, **dadurch gekennzeichnet, dass** das federelastische Element (252) als Federringkörper ausgebildet ist oder dass das federelastische Element (252) als O-Ring ausgebildet ist.

13. Schraubenverdichter nach einem der voranstehenden Ansprüche,
**dadurch gekennzeichnet, dass** die Bewegbarkeit der Kolbenstange (118) quer zur Verschieberichtung (72) durch den Führungseinsatz (172) begrenzt ist, insbesondere, dass die Bewegbarkeit der Kolbenstange (118) quer zur Verschieberichtung (72) durch ein Begrenzungselement (262, 286, 296) begrenzt ist, insbesondere, dass an dem Führungskörper (232, 234) das die Bewegung der Kolbenstange (118) quer zur Verschieberichtung (72) begrenzende Begrenzungselement (262) angeordnet ist, insbesondere, dass das Begrenzungselement (262) durch einen Begrenzungsbereich (262) des Führungskörpers (232, 234) gebildet ist.

14. Schraubenverdichter nach Anspruch 13, **dadurch gekennzeichnet, dass** das mindestens eine elastisch bewegbare Führungselement (276, 278, 292) relativ zum Trägerkörper (176) des Führungseinsatzes (172) begrenzt elastisch bewegbar ist, insbesondere, dass das mindestens eine Führungselement (276, 278, 292) durch ein am Trägerkörper (176) des Führungseinsatzes (172) angeordnetes Begrenzungselement (286, 296) quer zur Verschieberichtung (72) begrenzt elastisch bewegbar ist, insbesondere, dass das Begrenzungselement eine dem Führungselement (292) zugewandte, am Trägerkörper (176) des Führungseinsatzes (172) angeordnete Begrenzungsfläche (286, 296) aufweist.

15. Schraubenverdichter nach einem der voranstehenden Ansprüche, **dadurch gekennzeichnet, dass** das federelastische Element (252) in dem Führungseinsatz (172) in einer abgeschlossenen Kammer (254, 272, 274) angeordnet ist, insbesondere, dass das federelastische Element (252) in einer in dem Führungskörper (232, 234) vorgesehenen Aufnahmenut (254) angeordnet ist oder insbesondere, dass federelastische Element (252) in einer in dem Trägerkörper (176) vorgesehenen Aufnahmenut (272', 274') angeordnet ist.

## Claims

1. A screw compressor (10) comprising a compressor housing (12) with a screw rotor chamber (18) arranged therein, two screw rotors (26, 28), which are arranged in the screw rotor chamber (18), are mounted on the compressor housing (12) so as to be rotatable about respective screw rotor axes (22, 24), mesh with one another by means of their screw contours (32, 34), and each cooperate with compression wall surfaces (36, 38) arranged adjacently to and partially enclosing the screw contours in order to receive a gaseous medium fed by means of a low-pressure chamber (42) arranged in the compressor housing (12) and discharge said medium in the region of a high-pressure chamber (44) arranged in the compressor housing (12), wherein the gaseous medium is enclosed, with an intake volume at low pressure, in compression chambers formed between the screw contours (32, 34) and compression wall surfaces (36, 38) adjacent to the screw contours and is compressed at high pressure to an end volume, the screw compressor also comprising at least one control slide (52, 54), which is arranged in a slide channel (56) of the compressor housing (12), adjacently to both screw rotors (26, 28) by means of slide compression wall surfaces (62, 64), is movable in a displacement direction (72) parallel to the screw rotor axes (22, 24), is configured so as to influence the end volume and/or the starting volume, is rigidly connected to a piston rod (118) that leads to a cylinder assembly (112) for moving the at least one control slide (52), and is guided relative to the compressor housing (12) by means of a guide insert (172) that movably receives the piston rod (118) in the displacement direction (72),
**characterised in that** the piston rod (118) is guided transversely to the displacement direction (72) in the guide insert (172) in elastically resilient fashion by means of a guide element (242, 276, 278, 292).

2. A screw compressor in accordance with claim 1, **characterised in that** the guide element (242, 276, 278, 292) is elastically movable relative to the carrier body (176) of the guide insert transversely to the displacement direction (72).

3. A screw compressor in accordance with claim 1, **characterised in that** the guide element (242, 276, 278, 292) abuts against a peripheral surface (166) of the piston rod (118) in an elastically baised manner in the direction of the peripheral surface (166).

4. A screw compressor in accordance with the preceding claims, **characterised in that** the guide element (242, 276, 278, 292) is provided with at least one guide surface (246, 282, 284, 294) for the piston rod (118), which guide surface abuts against a peripheral surface (166) of the piston rod (118) without gaps, and **in that** the guide surface (246, 282, 284, 294) is elastically movable relative to a carrier body (176) of the guide insert (172) transversely to the displacement direction (72).

5. A screw compressor in accordance with the preceding claims, **characterised in that** the at least one guide element (242) is formed by a guide region of a guide body (232, 234), which guide region is movable relative to the carrier body (176) of the guide insert (172), in particular **in that** the guide body (232, 234) is arranged sitting securely in the carrier body (176) of the guide insert (172) by means of a base (244), in particular **in that** the at least one guide element (276, 278, 292) is guided by the guide body (232, 234) and is movable relative to the carrier body (176) of the guide insert (172).

6. A screw compressor in accordance with the preceding claims, **characterised in that** the piston rod (118) is guided by a plurality of guide elements (242, 276, 278) arranged at a spacing from one another in the displacement direction (72).

7. A screw compressor in accordance with the preceding claims, **characterised in that** the guide element (242, 276, 278, 292) is biased in the direction of the peripheral surface (166) of the piston rod (188) by a spring-elastic element (252) acting on the guide element, in particular **in that** the spring-elastic element (252) acts on the guide element (242, 276, 278, 292) on a side facing away from the piston rod (118), and/or in particular **in that** the at least one guide element (242, 276, 278, 292) is supported by the spring-elastic element (252).

8. A screw compressor in accordance with the preceding claims, **characterised in that** the spring-elastic element (252) is formed so as to support the guide element (242, 276, 278, 292) relative to the carrier body (176) of the guide insert (172) on a side facing away from the piston rod (118).

9. A screw compressor in accordance with claim 7 or 8, **characterised in that** the at least one guide element (276, 278, 292) is supported relative to the guide insert (172) by two spring-elastic elements (252) arranged at a spacing from one another in the displacement direction (72).

10. A screw compressor in accordance with the preceding claims, **characterised in that** the spring-elastic element (252) is formed in a manner surrounding the guide element (242, 276, 278, 292).

11. A screw compressor in accordance with claims 7 to 10, **characterised in that** the spring-elastic element (252) is formed as an annular body surrounding the guide element (242) on a side facing away from the piston rod (118).

12. A screw compressor in accordance with claims 7 to 11, **characterised in that** the spring-elastic element (252) is formed as a spring annular body or **in that** the spring-elastic element (252) is formed as an O-ring.

13. A screw compressor in accordance with the preceding claims, **characterised in that** the movability of the piston rod (118) transversely to the displacement direction (72) is delimited by the guide insert (172), in particular **in that** the movability of the piston rod (118) transversely to the displacement direction (72) is delimited by a delimiting element (262, 286, 296), in particular **in that** the delimiting element (262), which delimits the movement of the piston rod (118) transversely to the displacement direction (72), is arranged on the guide body (232, 234), in particular **in that** the delimiting element (262) is formed by a delimiting region (262) of the guide body (232, 234).

14. A screw compressor in accordance with claim 13, **characterised in that** the at least one elastically movable guide element (276, 278, 292) is elastically movable relative to the carrier body (176) of the guide insert (172) to a limited extent, in particular **in that** the at least one guide element (276, 278, 292) is elastically movable transversely to the displacement direction (72) to a limited extent by a delimiting element (286, 296) arranged on the carrier body (176) of the guide insert (172), in particular **in that** the delimiting element has a delimiting surface (286, 296) which faces the guide element (292) and is arranged on the carrier body (176) of the guide insert (172).

15. A screw compressor in accordance with the preceding claims, **characterised in that** the spring-elastic element (252) is arranged in the guide insert (172) in a closed chamber (254, 272, 274), in particular **in that** the spring-elastic element (252) is arranged in a receiving groove (254) provided in the guide body (232, 234), or in particular **in that** the spring-elastic element (252) is arranged in a receiving groove (272', 274') provided in the carrier body (176).

## Revendications

1. Compresseur hélicoïdal (10) comprenant un boîtier de compresseur (12) avec un espace de rotor hélicoïdal (18) disposé dans celui-ci, deux rotors hélicoïdaux (26, 28) disposés dans l'espace de rotor hélicoïdal (18) et montés sur le boîtier de compresseur (12) respectivement de manière à pouvoir tourner autour d'un axe de rotor hélicoïdal (22, 24), qui s'imbriquent l'un dans l'autre avec leurs contours hélicoïdaux (32, 34) et coopèrent respectivement avec des surfaces de paroi de compression (36, 38) jouxtant ceux-ci et renfermant ceux-ci en partie pour recevoir un milieu gazeux amené par l'intermédiaire d'un espace basse pression (42) disposé dans le boîtier de compresseur (12) et le distribuer dans la zone d'un espace haute pression (44) disposé dans le boîtier de compresseur (12), dans lequel le milieu gazeux est piégé dans des chambres de compression formées entre les contours hélicoïdaux (32, 34) et des surfaces de paroi de compression (36, 38) jouxtant ceux-ci à une pression basse avec un volume d'aspiration et est comprimé sur un volume final à une pression élevée, ainsi qu'au moins un coulisseau de commande (52, 54) disposé dans un canal de coulisseau (56) du boîtier de compresseur (12) et jouxtant les deux rotors hélicoïdaux (26, 28) avec des surfaces de paroi de compression de coulisseau (62, 64), lequel peut être déplacé dans une direction de coulissement (72) de manière parallèle aux axes de rotor hélicoïdal (22, 24) et est réalisé de manière à influencer le volume final et/ou le volume de départ, lequel est relié de manière rigide à une tige de piston (118) qui mène à un ensemble formant cylindre (112) pour le déplacement de l'au moins un coulisseau de commande (52), et lequel est guidé par rapport au boîtier de compresseur (12) au moyen d'un insert de guidage (172) recevant de manière mobile la tige de piston (118) dans la direction de coulissement (72),
**caractérisé en ce que** la tige de piston (118) est guidée de manière élastiquement souple au moyen d'un élément de guidage (242, 276, 278, 292) de manière transversale par rapport à la direction de coulissement (72) dans l'insert de guidage (172).

2. Compresseur hélicoïdal selon la revendication 1, **caractérisé en ce que** l'élément de guidage (242, 276, 278, 292) peut être déplacé de manière élastique de manière transversale par rapport à la direction de coulissement (72) par rapport au corps de support (176) de l'insert de guidage (172).

3. Compresseur hélicoïdal selon la revendication 1, **caractérisé en ce que** l'élément de guidage (242, 276, 278, 292) repose de manière précontrainte élastiquement sur la surface périphérique (166) en direction d'une surface périphérique (166) de la tige de piston (118).

4. Compresseur hélicoïdal selon l'une quelconque des revendications précédentes, **caractérisé en ce que** l'élément de guidage (242, 276, 278, 292) est pourvu d'au moins une surface de guidage (246, 282, 284, 294), reposant sans fente sur une surface périphérique (166) de la tige de piston (118), pour la tige de piston (118), et que la surface de guidage (246, 282, 284, 294) peut être déplacée de manière élastique transversalement par rapport à la direction de coulissement (72) par rapport à un corps de support (176) de l'insert de guidage (172).

5. Compresseur hélicoïdal selon l'une quelconque des revendications précédentes, **caractérisé en ce que** l'au moins un élément de guidage (242) est formé par une zone de guidage, pouvant être déplacée par rapport au corps de support (176) de l'insert de guidage (172), d'un corps de guidage (232, 234), en particulier que le corps de guidage (232, 234) est disposé avec une base (244) de manière à reposer solidairement dans le corps de support (176) de l'insert de guidage (172), en particulier que l'au moins un élément de guidage (276, 278, 292) est guidé par le corps de guidage (232, 234) et peut être déplacé par rapport au corps de support (176) de l'insert de guidage (172).

6. Compresseur hélicoïdal selon l'une quelconque des revendications précédentes, **caractérisé en ce que** la tige de piston (118) est guidée par plusieurs éléments de guidage (242, 276, 278) disposés à distance les uns des autres dans la direction de coulissement (72).

7. Compresseur hélicoïdal selon l'une quelconque des revendications précédentes, **caractérisé en ce que** l'élément de guidage (242, 276, 278, 292) est précontraint par un élément élastique à ressort (252) soumettant celui-ci à une action en direction de la surface périphérique (166) de la tige de piston (118), en particulier que l'élément (252) élastique à ressort soumet l'élément de guidage (242, 276, 278, 292) à une action sur un côté opposé à la tige de piston (118), et/ou en particulier que l'au moins un élément de guidage (242, 276, 278, 292) est soutenu par l'élément (252) élastique à ressort.

8. Compresseur hélicoïdal selon l'une quelconque des revendications précédentes, **caractérisé en ce que** l'élément (252) élastique à ressort est réalisé de manière à soutenir l'élément de guidage (242, 276, 278, 292) sur un côté opposé à la tige de piston (118) par rapport au corps de support (176) de l'insert de guidage (172).

9. Compresseur hélicoïdal selon la revendication 7 ou 8, **caractérisé en ce que** l'au moins un élément de guidage (276, 278, 292) est soutenu par deux éléments (252) élastiques à ressort disposés à distance l'un de l'autre dans la direction de coulissement (72) par rapport à l'insert de guidage (172).

10. Compresseur hélicoïdal selon l'une quelconque des revendications précédentes, **caractérisé en ce que** l'élément (252) élastique à ressort est réalisé de manière à renfermer l'élément de guidage (242, 276, 278, 292).

11. Compresseur hélicoïdal selon l'une quelconque des revendications 7 à 10, **caractérisé en ce que** l'élément (252) élastique à ressort est réalisé en tant que corps annulaire renfermant l'élément de guidage (242) sur un côté opposé à la tige de piston (118).

12. Compresseur hélicoïdal selon l'une quelconque des revendications 7 à 11, **caractérisé en ce que** l'élément (252) élastique à ressort est réalisé en tant que corps annulaire à ressort ou que l'élément (252) élastique à ressort est réalisé en tant que joint torique.

13. Compresseur hélicoïdal selon l'une quelconque des revendications précédentes, caractérisé que la mobilité de la tige de piston (118) est limitée de manière transversale par rapport à la direction de coulissement (72) par l'insert de guidage (172), en particulier que la mobilité de la tige de piston (118) est limitée de manière transversale par rapport à la direction de coulissement (72) par un élément de limitation (262, 286, 296), en particulier que l'élément de limitation (262) limitant le déplacement de la tige de piston (118) de manière transversale par rapport à la direction de coulissement (72) est disposé sur le corps de guidage (232, 234), en particulier que l'élément de limitation (262) est formé par une zone de limitation (262) du corps de guidage (232, 234).

14. Compresseur hélicoïdal selon la revendication 13, **caractérisé en ce que** l'au moins un élément de guidage (276, 278, 292) pouvant être déplacé de manière élastique peut être déplacé élastiquement de manière limitée par rapport au corps de support (176) de l'insert de guidage (172), en particulier que l'au moins un élément de guidage (276, 278, 292) peut être déplacé élastiquement de manière limitée par un élément de limitation (286, 296) disposé sur le corps de support (176) de l'insert de guidage (172) de manière transversale par rapport à la direction de coulissement (72), en particulier que l'élément de limitation présente une surface de limitation (286, 296) tournée vers l'élément de guidage (292), disposée sur le corps de support (176) de l'insert de guidage (172).

15. Compresseur hélicoïdal selon l'une quelconque des revendications précédentes, **caractérisé en ce que** l'élément (252) élastique à ressort est disposé dans l'insert de guidage (172) dans une chambre (254, 272, 274) fermée hermétiquement, en particulier que l'élément (252) élastique à ressort est disposé dans une rainure de logement (254) prévue dans le corps de guidage (232, 234) ou en particulier que l'élément (252) élastique à ressort est disposé dans une rainure de logement (272', 274') prévue dans le corps de support (176).
